# FASCICULE DE BREVET EUROPEEN

(11) **EP 1 955 975 B1**
(45) Date de publication et mention de la délivrance du brevet: **31.08.2011**
(21) Numéro de dépôt: 08290044.0
(22) Date de dépôt: 18.01.2008
(51) Int. Cl.: B66C 23/70, B21C 37/08

(54) **Dispositif télescopique de manutention**
Teleskopausleger
Telescopic boom

(30) Priorité: 12.02.2007 FR 0700991
(43) Date de publication de la demande: 13.08.2008
(73) Titulaire: MANITOU BF, 44150 Ancenis (FR)
(72) Inventeur: Braud, Marcel-Claude, 44150 Saint-Herblon (FR)
(74) Mandataire: Kaspar, Jean-Georges

(56) Documents cités:
- EP-A- 1 281 658
- EP-A1- 1 090 875
- DE-A1- 1 945 134
- DE-A1- 2 009 298
- DE-A1- 2 303 644
- DE-U1- 29 715 843
- DE-U1- 29 804 237
- FR-A1- 2 759 687
- FR-A1- 2 790 538

## Description

L'invention est relative à un dispositif télescopique de manutention, comportant au moins deux éléments de sections sensiblement rectangulaires, montés à coulissement relatif avec interposition de patins de glissement.

L'invention est particulièrement utile pour la fabrication de bras télescopiques de chariots de manutention ou de nacelles élévatrices de personnel.

Les bras télescopiques de type connu comportent généralement plusieurs éléments de sections rectangulaires à angles arrondis, montés à coulissement relatif avec interposition de patins de glissement.

Les documents DE 297 15 843 U1, FR 2 790 538, EP 1 090 875 et EP 1 281 658 décrivent d'autres structures de flèche télescopique inscriptibles dans un rectangle, destinées généralement à des grues télescopiques automotrices.

Un premier but de l'invention est d'augmenter la hauteur des sections d'élément de dispositif télescopique, tout en diminuant leur épaisseur moyenne, de manière à diminuer la masse de métal à utiliser pour la fabrication d'une gamme de poutres ou bras télescopiques.

Un deuxième but de l'invention est d'améliorer l'état de la technique connu en proposant un nouveau dispositif télescopique de manutention, de fabrication simple et économique.

Un troisième but de l'invention est d'améliorer les caractéristiques mécaniques et de guidage des éléments coulissants, tout en diminuant leur masse.

Un quatrième but de l'invention est de répartir les contraintes dues aux chargements, tout en réduisant le nombre d'éléments nécessaires dans une gamme de machines.

L'invention a pour objet un dispositif télescopique de manutention comportant au moins deux éléments de sections sensiblement rectangulaires montés à coulissement relatif avec interposition de patins de glissement, caractérisé en combinaison par le fait que chaque section sensiblement rectangulaire présente des pans inclinés supportant des patins de glissement, de manière à réduire un espacement entre deux dits éléments coulissants et par le fait que les pans inclinés sont ménagés sur les deux hauteurs de chaque section sensiblement rectangulaire en formant avec ces hauteurs un angle compris entre trois et dix degrés d'angle.

Selon d'autres caractéristiques alternatives de l'invention :
- l'angle d'inclinaison des pans inclinés est d'environ cinq degrés d'angle.
- les patins de glissement sont montés dans des cages munies de moyens de solidarisation à undit élément coulissant.
- au moins une cage de patins de glissement comporte un moyen de solidarisation à une bride ou cavalier d'undit élément coulissant.
- au moins un moyen de solidarisation est monté en sandwich entre ladite bride et une contre bride.
- au moins un moyen de solidarisation comporte un passage de vis de solidarisation.
- l'élément terminal de coulissement est solidarisé à une tête de montage, réalisée d'un seul tenant de manière à uniformiser la répartition des contraintes dans l'ensemble du dispositif.
- la tête de montage réalisée d'un seul tenant est une tête monobloc, obtenue par forgeage, moulage ou par un procédé équivalent.
- l'élément terminal de coulissement et la tête de montage sont solidarisés par une courbe concave de soudure, dont le sommet est situé entre des emplacements de patins de glissement.

L'invention sera mieux comprise grâce à la description qui va suivre donnée à titre d'exemple non limitatif en référence aux dessins annexés dans lesquels :
La figure 1 représente schématiquement une vue en section d'un élément de dispositif selon l'invention.
La figure 2 représente schématiquement une vue partielle en perspective d'un dispositif selon l'invention.
La figure 3 représente schématiquement une vue de côté, avec coupes partielles d'un dispositif selon l'invention.

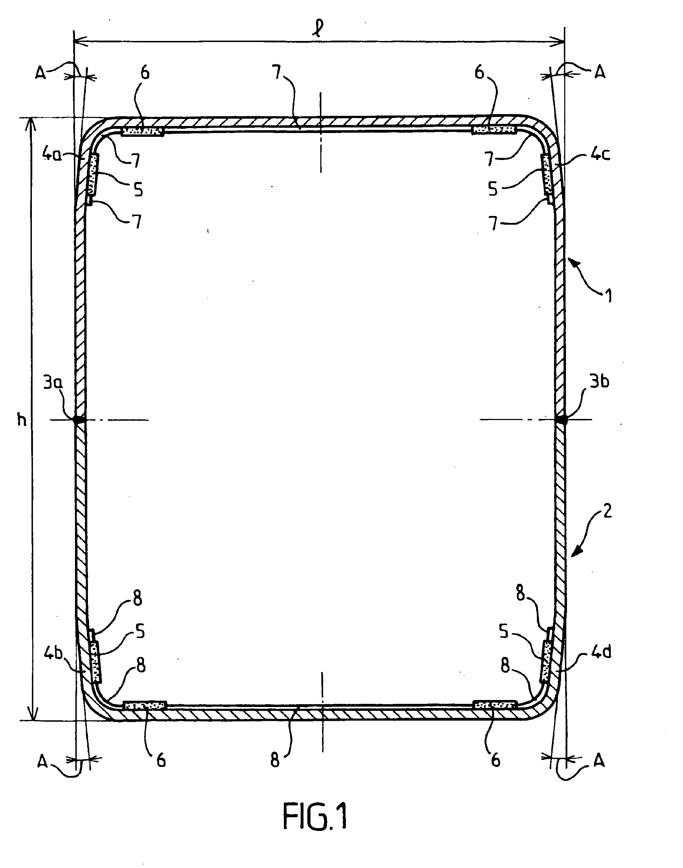

Sur la figure 1, un élément de dispositif selon l'invention est réalisé par pliage de deux tôles d'épaisseur constante pour donner à chaque pièce pliée une conformation en canal 1 ou 2, puis par soudage des deux conformations 1 et 2 en canal le long de deux lignes 3a, 3b d'assemblage.

L'ensemble ainsi réalisé forme un caisson creux de section sensiblement rectangulaire de hauteur h et de largeur I, qui présente des pans inclinés 4a, 4b, 4c, 4d sur les deux hauteurs.

Les pans inclinés 4a à 4d sont inclinés aux extrémités ou sommets de la section et vers l'intérieur d'une valeur A comprise entre trois et dix degrés d'angle, avantageusement de l'ordre de cinq degrés d'angle.

De préférence également, les conformations 1 et 2 en canal sont pliées à partir de tôles de même épaisseur, mais il est également possible de réaliser une conformation en une épaisseur supérieure à l'épaisseur de l'autre conformation, sans sortir du cadre de la présente invention : cette disposition est intéressante notamment pour réaliser l'élément de pied d'une poutre ou bras télescopique.

Avantageusement, on augmente par rapport à l'art antérieur la hauteur h des sections d'élément de dispositif selon l'invention, tout en diminuant leur épaisseur moyenne, de manière à diminuer la masse de métal à utiliser pour la fabrication d'une gamme de poutres ou bras télescopiques.

L'augmentation de hauteur h et la différence d'épaisseur entre les conformations 1 et 2 permettent en combinaison de réduire le nombre d'éléments de la gamme complète d'environ 40 % et de diminuer le tonnage de métal utilisé d'environ 11 %.

En outre, la différence de largeur entre éléments coulissants successifs est réduite grâce à l'invention, en prévoyant un placement des patins 5 latéraux de glissement sur les pans inclinés 4a à 4d, tout en maintenant les patins de glissement 6 de manière connue sous les côtés supérieur et inférieur d'un élément de dispositif selon l'invention.

Cette disposition permet, d'une part, d'utiliser un seul modèle de patin de glissement de type connu en soi pour chaque patin 5 ou 6.

Cette disposition permet, d'autre part, d'utiliser une cage commune 7 de positionnement et de maintien de quatre patins 5 et 6 en partie haute et une cage commune 8 de positionnement et de maintien de quatre patins 5 et 6 en partie basse.

L'augmentation de la hauteur h a pour conséquence une augmentation de l'espacement entre les patins 5 et 6 de la partie haute et les patins 5 et 6 de la partie basse, ce qui améliore la résistance à la torsion et la précision du guidage de l'extrémité du dispositif selon l'invention.

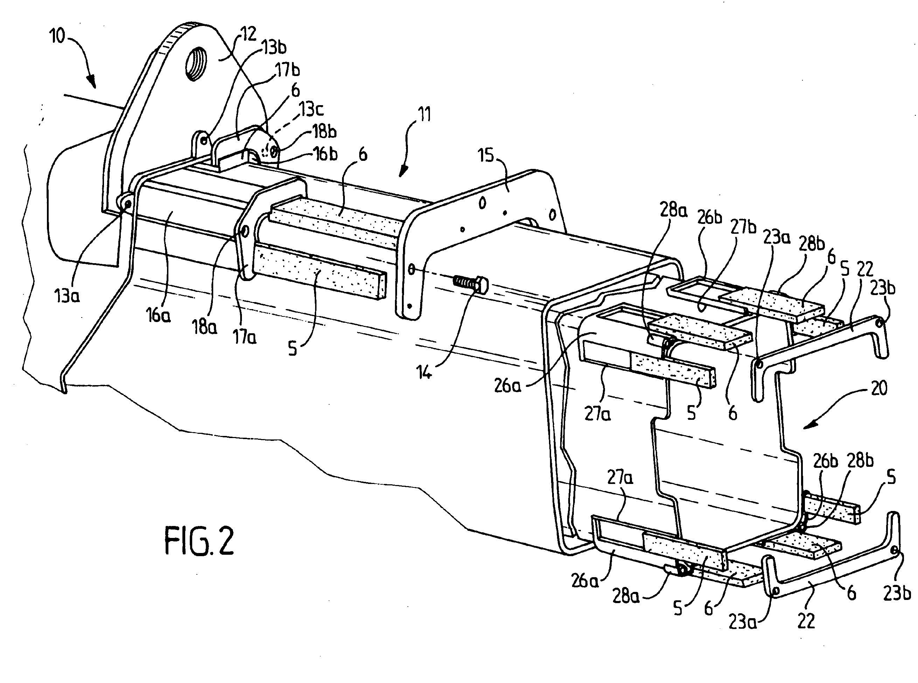

Sur la figure 2, un dispositif selon l'invention comporte un élément 10 de plus grande section et un élément 11 de plus petite section montés à coulissement relatif avec interposition de patins 5 et 6 de glissement.

L'élément 10 comporte une bride 12 d'extrémité munie de trois taraudages 13a, 13b, 13c destinés à recevoir des vis 14 passant à travers des orifices d'une contre bride 15 de maintien de deux cages 16a, 16b de positionnement et de maintien de patins 5 et 6.

Chaque cage 16a ou 16b comporte à cet effet une aile 17a ou 17b pourvue d'au moins un orifice 18a ou 18b de passage de vis 14.

Après fixation, chaque aile 17a ou 17b est prise en sandwich entre la bride 12 et la contre bride 15 et assure le blocage de la cage 16a ou 16b correspondante.

En outre, le rebord inférieur de la contre bride 15 assure le blocage des patins 5 et 6 à l'intérieur de leur cage 16a ou 16b lors du coulissement relatif des éléments 10 et 11 dans le sens de l'extension du télescope, tandis que le fond des cages 16a ou 16b assure le blocage des patins 5 et 6 à l'intérieur de leur cage 16a ou 16b dans le sens de la rétraction du télescope.

Le démontage de la contre bride 15 facilite également le remplacement des patins 5 et 6 usés ou la compensation de leur usure par insertion d'une cale de réglage.

Le dispositif selon l'invention peut également comporter au moins un élément 20 de section encore plus petite destiné à être monté à coulissement relatif avec interposition de patins 5 et 6 de glissement dans l'élément 11 de plus petite section.

L'élément 20 comporte un cavalier 22 formant bride d'extrémité et muni de deux passages 23a et 23b destinés à recevoir des vis de fixation à deux cages 26a, 26b de positionnement et de maintien de patins 5 et 6.

Chaque cage 26a ou 26b est soudée par un cordon continu 27a ou 27b de soudure au tube principal de l'élément 20 de section encore plus petite,

Chaque cage 26a ou 26b est munie d'au moins un taraudage 28a ou 28b destiné à recevoir une vis passant à travers un des deux passages 23a et 23b du cavalier 22 formant bride d'extrémité, en assurant ainsi le positionnement et le maintien des patins 5 et 6.

Le cavalier 22 formant bride d'extrémité assure le blocage des patins 5 et 6 à l'intérieur de leur cage 26a ou 26b lors du coulissement relatif des éléments 20 et 11 dans un premier sens de télescopage, tandis que le fond des cages 26a ou 26b assure le blocage des patins 5 et 6 à l'intérieur de leur cage 26a ou 26b dans le sens opposé à ce premier sens de télescopage.

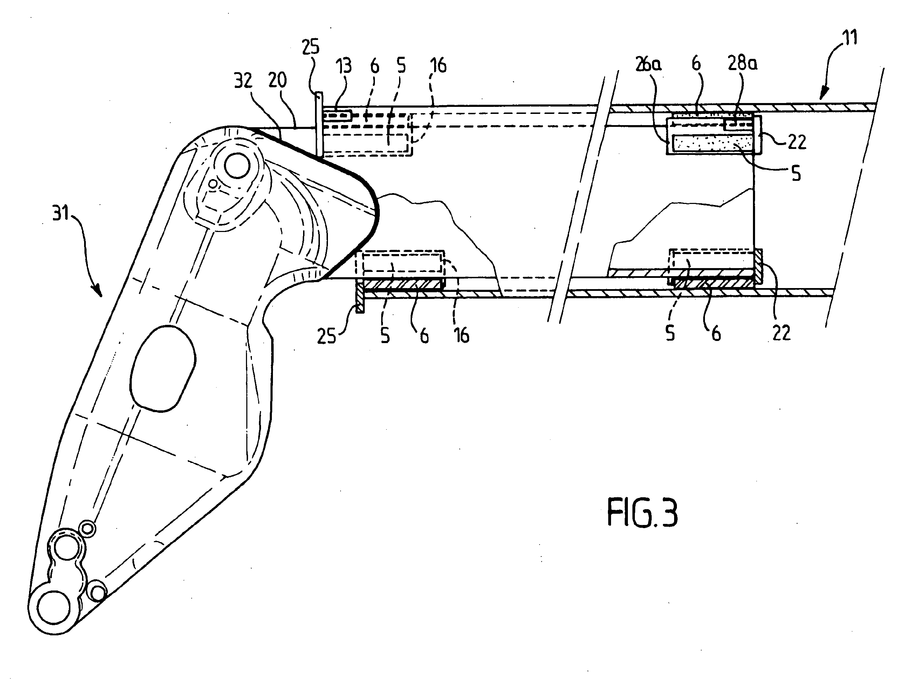

Sur la figure 3, un dispositif selon l'invention comporte un élément 20 terminal de coulissement et une tête 31 de montage assemblés par soudage le long d'une courbe 32 concave de grande longueur.

La tête 31 de montage est de préférence une tête monobloc réalisée d'un seul tenant, par exemple par forgeage ou par moulage.

La configuration de la tête 31 de montage est déterminée pour uniformiser la répartition des contraintes dues au chargement et dégager les passages internes correspondant au logement et au débattement des actionneurs tels que vérin(s) d'inclinaison ou biellette(s) de commande ainsi qu'à la protection des flexibles et canalisations d'alimentation en énergie hydraulique ou électrique.

En outre, le volume de la tête 31 de montage est dégagé pour assurer le fonctionnement des accessoires et porte accessoires destinés à être montés sur la tête 31.

De préférence, la courbe 32 concave de soudure est réalisée de manière à positionner les patins de glissement 5 et 6 le plus en avant possible de l'élément 20 terminal de coulissement, en évitant le passage des patins 5 et 6 sur un cordon de soudure susceptible de les user ou les endommager.

Les patins de glissement 5 et 6 positionnés en avant du cordon de soudure 32 sont retenus à l'intérieur de leur cage par un cavalier 25 formant bride d'extrémité

La longueur de cordon de la courbe continue 32 concave de soudure est suffisante pour répartir les contraintes dues aux chargements et éviter toute concentration de contrainte : cette longueur est de préférence voisine du double de la hauteur de section de l'élément terminal 20.

La diminution de masse et l'augmentation des performances obtenues grâce à l'invention permettent l'amélioration des performances et des abaques de charge des machines équipées d'un dispositif selon l'invention.

L'invention décrite en référence à plusieurs modes de réalisation particuliers n'y est nullement limitée, mais couvre au contraire toute modification de forme et toute variante de réalisation dans le cadre de l'invention telle que définie dans les revendications.

## Revendications

1. Dispositif télescopique de manutention comportant au moins deux éléments (10, 11, 20) de sections sensiblement rectangulaires montés à coulissement relatif avec interposition de patins (5, 6) de glissement, caractérisé en combinaison par le fait que chaque section sensiblement rectangulaire présente des pans inclinés (4a-4d) supportant des patins (5) de glissement, de manière à réduire un espacement entre deux dits éléments (10, 11, 20) coulissants et par le fait que les pans inclinés (4a-4d) sont ménagés sur les deux hauteurs de chaque section sensiblement rectangulaire en formant avec ces hauteurs un angle (A) compris entre trois et dix degrés d'angle.

2. Dispositif selon la revendication 1, **caractérisé par le fait que** l'angle (A) d'inclinaison des pans inclinés est d'environ cinq degrés d'angle.

3. Dispositif selon l'une quelconque des revendications 1 ou 2, **caractérisé par le fait que** les patins (5, 6) de glissement sont montés dans des cages (7, 8, 16a, 16b, 26a, 26b) munies de moyens (17a, 17b, 27a, 27b) de solidarisation à undit élément coulissant (10 ou 11).

4. Dispositif selon l'une quelconque des revendications 1 à 3, **caractérisé par le fait qu'**au moins une cage (16a, 16b, 26a, 26b) de patins (5, 6) de glissement comporte un moyen (17a, 17b, 28a, 28b) de solidarisation à une bride (12, 22) ou cavalier d'undit élément coulissant (10 ou 11 ou 20).

5. Dispositif selon la revendication 4, **caractérisé par le fait qu'**au moins un moyen (17a, 17b) de solidarisation est monté en sandwich entre ladite bride (12) et une contre bride (15).

6. Dispositif selon la revendication 4 ou la revendication 5, **caractérisé par le fait qu'**au moins un moyen de solidarisation (17a, 17b) comporte un passage de vis (18a, 18b) de solidarisation.

7. Dispositif selon l'une quelconque des revendications précédentes, **caractérisé par le fait que** l'élément terminal (20) de coulissement est solidarisé à une tête (31) de montage, réalisée d'un seul tenant de manière à uniformiser la répartition des contraintes dans l'ensemble du dispositif.

8. Dispositif selon la revendication 7, **caractérisé par le fait que** la tête (31) de montage réalisée d'un seul tenant est une tête monobloc, obtenue par forgeage, moulage ou par un procédé équivalent.

9. Dispositif selon la revendication 7 ou la revendication 8, **caractérisé par le fait que** l'élément terminal (20) de coulissement et la tête (31) de montage sont solidarisés par une courbe (32) concave de soudure, dont le sommet est situé entre des emplacements de patins (5, 6) de glissement.

## Claims

1. A telescopic boom device having at least two elements (10, 11, 20) with substantially rectangular sections relatively slidingly mounted with insertion of sliding pads (5, 6), **characterized in** combination by the fact that each substantially rectangular section has inclined faces (4a-4d) supporting sliding pads (5), so as to reduce a spacing between two of said sliding elements (10, 11, 20) and by the fact that the inclined faces (4a-4d) are formed on the two heights of each substantially rectangular section by forming an angle (A) between three and ten degrees with said heights.

2. The device according to claim 1, **characterized by** the fact that the incline angle (A) of the inclined faces is about five degrees.

3. The device according to any one of claims 1 or 2, **characterized by** the fact that the sliding pads (5, 6) are mounted in casings (7, 8, 16a, 16b, 26a, 26b) provided with a means (17a, 17b, 27a, 27b) for securing them to one of said sliding elements (10 or 11).

4. The device according to any one of claims 1 to 3, **characterized by** the fact that at least one sliding pad (5, 6) casing (16a, 16b, 26a, 26b) includes a means (17a, 17b, 28a, 28b) for securing it to a flange (12, 22) or staple of one said sliding element (10 or 11 or 20).

5. The device according to claim 4, **characterized by** the fact that at least one securing means (17a, 17b) is sandwiched between said flange (12) and a companion flange (15).

6. The device according to claim 4 or claim 5, **characterized by** the fact that at least one securing means (17a, 17b) has a securing screw passage (18a, 18b).

7. The device according to any one of the preceding claims, **characterized by** the fact that the terminal sliding element (20) is secured to a mounting head (31), made in a single piece so as to make the distribution of stresses uniform in the entire device.

8. The device according to claim 7, **characterized by** the fact that the mounting head (31) made in a single piece is a unitary head, obtained by forging, molding, or an equivalent method.

9. The device according to claim 7 or claim 8, **characterized by** the fact that the terminal sliding element (20) and the mounting head (31) are secured by a concave weld curve (32), the apex of which is located between the sliding pad (5, 6) locations.

## Patentansprüche

1. Eine teleskopische Hubvorrichtung, welche mindestens zwei Elemente (10, 11, 20) mit im wesentlichen rechtwinkligem Querschnitt umfasst, welche derart montiert sind, dass sie mit zwischen ihnen angeordneten Gleitelementen (5, 6) gleitend gegeneinander verschiebbar sind und in Kombination miteinander **dadurch gekennzeichnet sind, dass** jeder der im wesentlichen rechtwinkligen Querschnitte über geneigte Flächen (4a - 4d) verfügt, welche Gleitelemente (5) derart tragen, dass ein Abstand zwischen den beiden gegeneinander verschiebbaren Elementen (10, 11, 20) vermindert wird, sowie dadurch, dass die geneigten Flächen (4a - 4d) an den beiden Stegen jedes der im wesentlichen rechtwinkligen Querschnitte angeordnet sind, wobei sie mit diesen Stegen einen Winkel A. ausbilden, der zwischen drei und zehn Winkelgraden beträgt.

2. Vorrichtung nach Anspruch 1 **gekennzeichnet dadurch, dass** der Neigungswinkel (A) der geneigten Flächen rund fünf Winkelgrade beträgt.

3. Vorrichtung nach einem der Ansprüche 1 oder 2 **gekennzeichnet dadurch, dass** die Gleitelemente (5, 6) in Aufnahmen (7, 8, 16a, 16b, 26a, 26b) angeordnet sind, welche mit Mitteln (17a, 17b, 27a, 27b) zum Befestigen an einem verschiebbaren Element (10 oder 11) versehen sind.

4. Vorrichtung nach einem der Ansprüche 1 bis 3 **gekennzeichnet dadurch, dass** mindestens eine Aufnahme (16a, 16b, 26a, 26b) für Gleitelemente (5, 6) ein Mittel (17a, 17b, 28a, 28b) zum Befestigen an einem Flansch (12, 22) oder Reiter eines verschiebbaren Elements (10 oder 11 oder 20) trägt.

5. Vorrichtung nach Anspruch 4 **gekennzeichnet dadurch, dass** mindestens ein Mittel (17a, 17b) zum Befestigen berührend zwischen dem Flansch (12) und einem Gegenflansch (15) angeordnet ist.

6. Vorrichtung nach Anspruch 4 oder 5 **gekennzeichnet dadurch, dass** mindestens ein Mittel (17a, 17b) zum Befestigen eine Durchgangsbohrung (18a, 18b) für Befestigungsschraube aufweist.

7. Vorrichtung nach irgendeinem der vorhergehenden Ansprüche **gekennzeichnet dadurch, dass** das abschließende verschiebbare Element (20) fest mit einem Montagekopf (31) verbunden ist, welcher derart durchgängig ausgebildet ist, dass die Spannungen in der gesamten Vorrichtung gleichförmig verteilt werden.

8. Vorrichtung nach Anspruch 7 **gekennzeichnet dadurch, dass** der durchgängig ausgebildete Montagekopf (31) durch Schmieden, Gießen oder einen äquivalenten Prozess nahtlos geformt wurde.

9. Vorrichtung nach einem der Ansprüche 7 oder 8 **gekennzeichnet dadurch, dass** das abschließende verschiebbare Element (20) und der Montagekopf (31) durch eine konkav verlaufende Schweißnaht (32) verbunden sind, deren Scheitelpunkt sich zwischen den Stellen befindet, an denen die Gleitelemente (5, 6) angeordnet sind.
